# EUROPÄISCHE PATENTSCHRIFT

(11) **EP 2 023 716 B1**
(45) Veröffentlichungstag und Bekanntmachung des Hinweises auf die Patenterteilung: **26.08.2009**
(21) Anmeldenummer: 07720160.6
(22) Anmeldetag: 24.05.2007
(51) Int. Cl.: A01M 3/00

(54) **VORRICHTUNG ZUM FANGEN VON INSEKTEN, SPINNEN UND ANDERER DERARTIGER KLEINTIERE**
DEVICE FOR CATCHING INSECTS, SPIDERS AND OTHER SMALL ANIMALS OF THIS TYPE
DISPOSITIF DE CAPTURE D'INSECTES, D'ARAIGNÉES ET D'AUTRES PETITS ANIMAUX SIMILAIRES

(30) Priorität: 08.06.2006 CH 927062006
(43) Veröffentlichungstag der Anmeldung: 18.02.2009
(73) Patentinhaber: Jancic, Silvin M., 5612 Villmergen (CH)
(72) Erfinder: Jancic, Silvin M., 5612 Villmergen (CH)
(74) Vertreter: Spierenburg, Pieter
(86) Internationale Anmeldenummer: PCT/CH2007/000263
(87) Internationale Veröffentlichungsnummer: WO 2007/140636

(56) Entgegenhaltungen:
- DE-A1- 3 225 330
- GB-A- 191 204 737
- US-A- 4 733 495
- US-A- 5 367 821

## Beschreibung

Die Erfindung betrifft eine Vorrichtung zum Fangen von Insekten, Spinnen und anderer derartiger Kleintiere gemäß einem Teil des Patentanspruches 1.

Bisher bekannt gewordene Methoden der Entfernung von Insekten und Spinnen aus dem Lebensumfeld des Menschen sind beispielsweise die Fliegenklatsche und die Leimrute, die jedoch aus hygienischen Gesichtspunkten eher fragwürdige Instrumente zum Beseitigen von Insekten darstellen. Im Handel sind Sprühdosen und Pulver z.B. mit Insektiziden speziell gegen fliegende oder kriechende Insekten erhältlich, eine umweltbelastende, aber verbreitete Tötungsmethode. Insektizide stellen bei unsachgemäßer und häufiger Anwendung in bewohnten Räumen ein nicht zu vernachlässigendes Gesundheitsrisiko auch für den Menschen dar. Nach einer anderen modernen Methode werden angelockte fliegende Insekten in speziellen Geräten mittels elektrischem Strom getötet. Bekannt sind auch kleine elektrisch betriebene Tischsauger, die auch zum Einsaugen von Insekten und Spinnen verwendet werden. Mitunter kann man zwar einen üblichen Staubsauger einsetzen, aber das ist zeitraubend, umständlich und oft bedenklich, da beispielsweise von Lebensmitteln das Absaugen mit einem Staubsauger sehr unhygienisch ist.

Eine weitere Lösung liefern Geräte mit einem Impulssauger und daran angeschlossener Saugdüse. Dabei wird von der Erkenntnis ausgegangen, dass man sich z. B. einer Fliege mit dem Finger meist bis auf etwa 1 cm nähern kann, bevor sie wegfliegt. Eine zum Aufsaugen einer Fliege erforderliche Saugdüse hat etwa eine Querschnittsabmessungen eines Fingers oder Daumens, und man braucht nur einen kurzen impulsartige Saugstoss auszuüben, um bei kurzer Entfernung das Objekt einzusaugen.

Eine Vorrichtung dieser Art ist aus der DE 3225330A1 bekannt. Bei dieser bekannten Vorrichtung ist einem Hohlzylinder, in dem ein Kolben und ein Spannelemente angeordnet sind, ein abschraubbarer Fangstutzen vorgeschaltet, in dem sich der Fangraum für die Insekten befindet. Der Fangraum ist einlassseitig durch ein als Einwegventil wirkendes Sperrelement, und auslassseitig durch einen Siebkorb abgeschlossen. Die das Spannelement bildende Schraubenfeder, die ihre Energie durch axiales Zusammendrücken speichert, ist zwischen der Vorderseite des Kolbens und dem vorderen Ende des Hohlzylinders angeordnet. Als Spannorgan für die Schraubenfeder ist ein auf die Rückseite des Kolbens wirkender Druckstempel vorgesehen, der am Boden eines Spanntopfes angebracht ist und aussen auf dem Hohlzylinder geführt ist. Bei dieser bekannten Vorrichtung ist ein dem Hohlzylinder vorgeschalteter, durch einen Siebkorb gegen diesen abgeschlossener Fangraum erforderlich. Der von der Schraubenfeder betätigte Kolben, der lediglich an der zylindrischen Kolbenfläche in dem Hohlzylinder geführt Ist, kann sich verhältnismässig leicht verkanten und dadurch den Ansaugvorgang stören.

Einen weitergebildeten Impulssauger offenbart die G 91 16 394.3, bei dem die federelastischen Spannelemente zwischen der Rückseite des Kolbens und dem Bodenteil des Hohlzylinders angeordnet sind. Der Kolben ist auf der Rückseite mit einer zur Führung des Kolbens und zur Spannung der federelastischen Spannelemente dienenden Führungsstange verbunden. Dadurch wird erreicht, dass die mit dem Kolben verbundene Führungsstange für eine sichere Führung des Kolbens sorgt. Gleichzeitig dient sie als Spannorgan für die Zugfedern, indem sie mit einem Spannhebel versehen ist. Der Nachteil dieser Anordnung ist der komplexe Aufbau und die Baulänge des Impulssaugers, die sich aus der Länge des Saugrohrs, der Länge des Zylinders und der Länge des Griffs mit Spannhebel ergibt.

Der vorliegenden Erfindung liegt die Aufgabe zugrunde, diese Nachteile bekannter Vorrichtungen zum Fangen von Insekten, Spinnen und anderer derartiger Kleintiere zu beseitigen.

Diese Aufgabe wird von einem lmpulssauger durch die Merkmale des Patentanspruchs 1 gelöst.

Bei der erfindungsgemässen Vorrichtung ist ein federelastisches Element, beispielsweise eine Druckfeder zwischen dem Kolben und dem Bodenteil des Saugrohrs in einem Hohlzylinder angeordnet. Das mit dem Kolben über das federelastische Element wirkverbundene Saugrohr ist in axialer Richtung verschiebbar und in einer Durchführung der vorderen Zylinderwand beweglich gehalten. Der Kolben weist saugrohrseitig Rastmittel auf, die zum Einrasten in einer dafür im Bodenteil des Saugrohrs angeordneten Aufnahme vorgesehenen sind, und die über einen von aussen bedienbaren Auslösemechanismus lösbar sind. Zur Betätigung, das heisst zum Spannen des Impulssaugers wird das Saugrohr in den Zylinder geschoben und gegen die Druckkraft des federelastischen Elements in Richtung Zylinderboden gedrückt bis das Rastmittel des Kolbens in der Haltevorrichtung im Bodenteil des Saugrohres einreiste. Zum Auslösen, das heisst zum Fangen eines Insekts wird das Saugrohr aus dem Zylinder gezogen und der mit dem Saugrohr über das federelastische Element verbundene Kolben in Richtung vordere Zylinderwand geschoben, so dass die Auslösevorrichtung mit dem Rastmittel in Eingriff kommt und durch Betätigen des Auslösers die Haltevorrichtung entriegelt. Aufgrund der Druckkraft des federelastischen Elementes wird nun einerseits das Saugrohr noch weiter aus dem Zylinder geschoben, bis der Bodenteil des Saugrohrs an der Innenseite der vorderen Zylinderwand ansteht, und andererseits wird der Kolben in Richtung Zylinderboden gedrückt. Dadurch entsteht im Zylinderraum zwischen dem Kolben und dem Bodenteil des Saugrohres ein Unterdruck, wodurch Luft durch das Saugrohr eingesogen wird. Dieser Luftstrom saugt ein vor dem Saugrohr befindliches Insekt in den im vorderen Bereich des Saugrohrs angeordneten Fangraum. Mit der erfindungsgemässen Vorrichtung wird zum einen erreicht, dass sich das Saugrohr beim Auslösen des Fangvorgangs dem zu fangenden Objekt noch nähert, was eine erhöhte Fangsicherheit gibt, und zum anderen kann die Gesamtbaugrösse der Vorrichtung klein gehalten werden, da das Saugrohr bei Nichtgebrauch in den Zylinder geschoben werden kann. Ein weiterer Vorteil besteht darin, dass der Impulssauger nur ausgelöst werden kann, wenn das Saugrohr in der Vorrichtung entsprechend positioniert ist, so dass die Auslösevorrichtung entriegelbar ist, was eine erhöhte Sicherheit im Umgang mit dem Impulssauger zur Folge hat.

Weitere Vorteile der Erfindung folgen aus den abhängigen Patentansprüchen und aus der nachfolgenden Beschreibung, in welcher die Erfindung anhand von in den Zeichnungen dargestellten Ausführungsbeispielen näher erläutert wird.

Es zeigen:
- Fig. 1: das Gehäuse der Fangvorrichtung mit eingeschobenem bzw. ausgefahrenem Saugrohr;
- Fig. 2: einen Querschnitt durch die Längsachse der Fangvorrichtung mit entspannter Druckfeder;
- Fig.3: einen Querschnitt durch die Längsachse der Fangvorrichtung mit gespannter Druckfeder in gesicherter Position;
- Fig.4: einen Querschnitt durch die Längsachse der Fangvorrichtung mit gespannter Druckfeder in verriegelter Auslöseposition;
- Fig. 5a: eine Teilansicht eines Querschnitts durch die Längsachse der Fangvor- richtung im Bereich der Haltevorrichtung in verriegelter Position;
- Fig. 5b: einen Querschnitt senkrecht zur Längsachse der Fangvorrichtung im Bereich der Haltevorrichtung in verriegelter Position;
- Fig.6a: eine Teilansicht eines Querschnitts durch die Längsachse der Fangvorrichtung im Bereich der Haltevorrichtung in entriegelter Position;
- Fig. 6b: einen Querschnitt senkrecht zur Längsachse der Fangvorrichtung im Bereich der Haltevorrichtung in entriegelter Position;
- Fig. 7: die Fangvorrichtung mit, einem am Gehäuse angeordneten pistolen- artigen Griff mit Abzughebel;
- Fig. 8: eine Ausführung der Fangvorrichtung mit einem Saugrohr in Form eines Teleskoprohres.

In den Figuren sind für dieselben Elemente jeweils dieselben Bezugszeichen verwendet worden und erstmalige Erklärungen betreffen alle Figuren, wenn nicht ausdrücklich anders erwähnt.

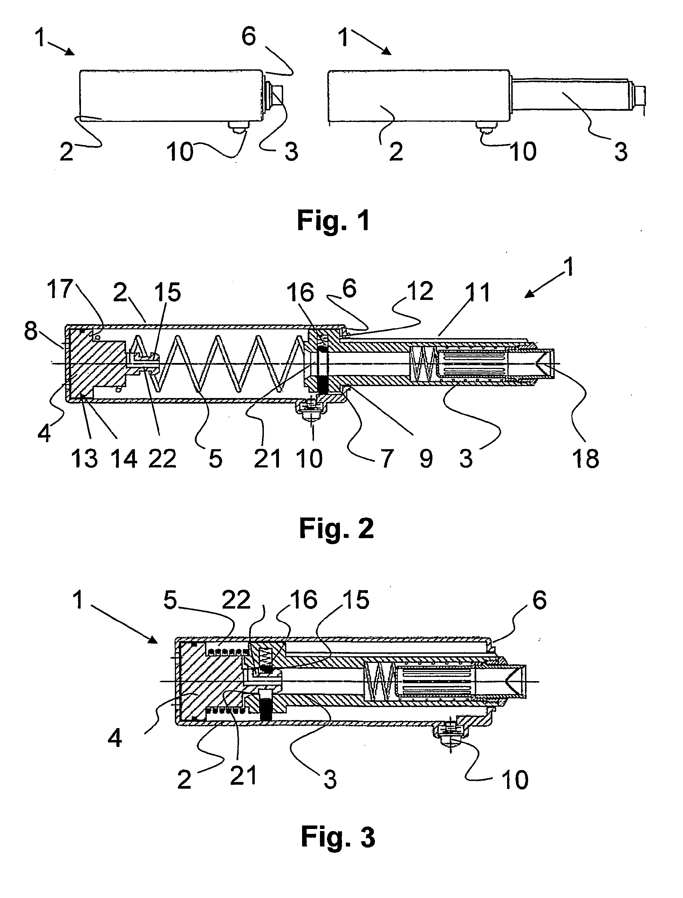

In der Figur 1 ist eine beispielsweise Ausführung der erfindungsgemässen Fangvorrichtung 1 mit einem zylinderartigen Gehäuseteil 2 und einem Saugrohr 3 gezeigt. Das Saugrohr 3 ist in axialer Richtung verschiebbar und in einer Durchführung in der vorderen Wand 6 des zylinderartigen Gehäuseteils 2 beweglich geführt. In der linken Abbildung der Figur 1 befindet sich das Saugrohr 3 im Gehäuseteil 2. Die rechte Abbildung zeigt die Fangvorrichtung 1 mit vollständig ausgezogenem Saugrohr 3.

Die Figur 2 zeigt einen Querschnitt durch die Längsachse der Fangvorrichtung 1. Im Gehäuseteil 2 ist ein Kolben 4 angeordnet, der über ein federelastisches Element, beispielsweise einer Druckfeder 5 mit dem Boden 7 des Saugrohrs 3 wirkverbunden ist. Die entspannte Feder 5 drückt den Kolben 4 und das Saugrohr 3 auseinender, so dass der Kolben 4 an der hinteren Gehäusewand 8 und der Boden 7 des Saugrohrs 3 an der vorderen Gehäusewand 6 anliegt. Das Saugohr 3 ist in der Durchführung 9 der vorderen Gehäusewand 6 geführt. Der Boden 7 des Saugrohres 3 weist einen Innendurchmesser auf, der etwa dem Innendurchmesser des Gehäuses 2 entspricht, so dass das Saugrohr 3 in axial Richtung verschiebbar ist, ohne zu verkanten. An der Oberseite des Saugrohres 3 ist ein in Längsrichtung verlaufender Steg 11 angeordnet, der in eine Ausnehmung 12 in der Durchführung 9 der vorderen Gehäusewand 6 eingreift. Dadurch ist das Saugrohr 3 drehgesichert, d.h. dass das Saugrohr 3 nur in wichtung der Längsachse bewegt werden kann, aber bezüglich der Längsachse der Vorrichtung nicht drehbar ist. Der stempelförmige Kolben 4 weist einen Durchmesser auf, der etwa dem Innendurchmesser des zylinderförmigen Kolbengehäuses 2 entspricht. Eine in eine Ringnut 14 im Kolben 4 eingelegte Dichtung 13 liegt dadurch dichtend an der Innenwand des Kolbengehäuses 2 an. Der Kolben 4 ist saugrohrseitig abgestuft und endet in einem Nippel 15, der ein Rastmittel bildet, das zum Einrasten in einer dafür im Bodenteil 7 des Saugrohrs 3 angeordneten Haltevorrichtung mit einer Verriegelung 16 vorgesehenen ist. Die Haltevorrichtung wird von einem Schieber 26, der in einem senkrecht zur Längsachse verlaufenden Schlitz 25 geführten und, federbelastet ist, gebildet. Der Schieber 26 weist ein Loch zur Aufnahme des Nippels 15 auf und ist dazu bestimmt, in die Nut 22 des Nippels 15 einzurasten. Die erste Abstufung im Kolben 4 bildet eine Schulter 17, die der Aufnahme der Druckfeder 5 dient. An der Mündung des Saugrohrs 3 ist ein abnehmbarer Fangbehälter 18 für die Aufnahme der zu fangenden Insekten angeordnet. Im vorderen Endbereich des Gehäuses 2 ist ein als Druckknopf 10 ausgebildeter Auslöser zu erkennen. In der dargestellten Position, die den Zustand nach einem Fangvorgang zeigt, ist das Saugrohr 3 maximal ausgefahren und der Kolben 4 befindet sich am hinteren Ende des Kolbengehäuses 2.

In Figur 3 ist ein Querschnitt durch die Längsachse der Fangvorrichtung 1 mit gespannter Druckfeder 5 dargestellt. Um die Druckfeder 5 zu spannen, wird das Saugrohr 3 gegen die Federkraft der Druckfeder 5 in das Gehäuse 2 gestossen. Sobald die Druckfeder 5 genügend zusammengedrückt und sich der Nippel 15 in der kolbenseitige Öffnung 21 des Saugrohrs 3 befindet, schnappt die in der Haltevorrichtung angeordnete Verriegelung 16 in eine Ringnut 22 im Nippel 15 ein. Dadurch wird der unter der Spannung der Druckfeder 5 stehende Kolben 4 mit dem Saugrohr 3 zusammengehalten. Das Saugrohr 3 befindet sich nahezu gänzlich im Gehäuse 2. Lediglich der vorderste Teil des Saugrohrs 3 ragt aus der vorderen Zylinderwand 6. Da in dieser Position die Verriegelung 16 von aussen nicht zugänglich ist, kann sie auch nicht gelöst werden. Die Fangvorrichtung 1 ist zwar gespannt jedoch noch gesichert. Wird das Saugrohr 3 axial aus dem Gehäuse 2 gezogen, so bewegt sich der mit dem Saugrohr 3 über die Haltevorrichtung 16 verbundene und verriegelte Kolben 4 ebenfalls in Richtung zur vorderen Zylinderwand 6. Der Fangvorgang kann dann ausgelöst werden, wenn der Kolben 4 mit dem Boden 7 des Saugrohrs 3 im Gehäuse 2 so positioniert sind, dass die Verriegelung 16 vom Auslöser betätigbar ist. Zu diesem Zweck ist im Bereich des Auslösers 10 ein Anschlag 34 an der Innenseite der Gehäusewand vorgesehen, an dem der Schieber 26 ansteht, sobald das Saugrohr 3 ganz ausgezogen ist. Durch Drücken auf den Auslöser 10 wird die Haltevorrichtung entriegelt und der Fangvorgang ausgelöst.

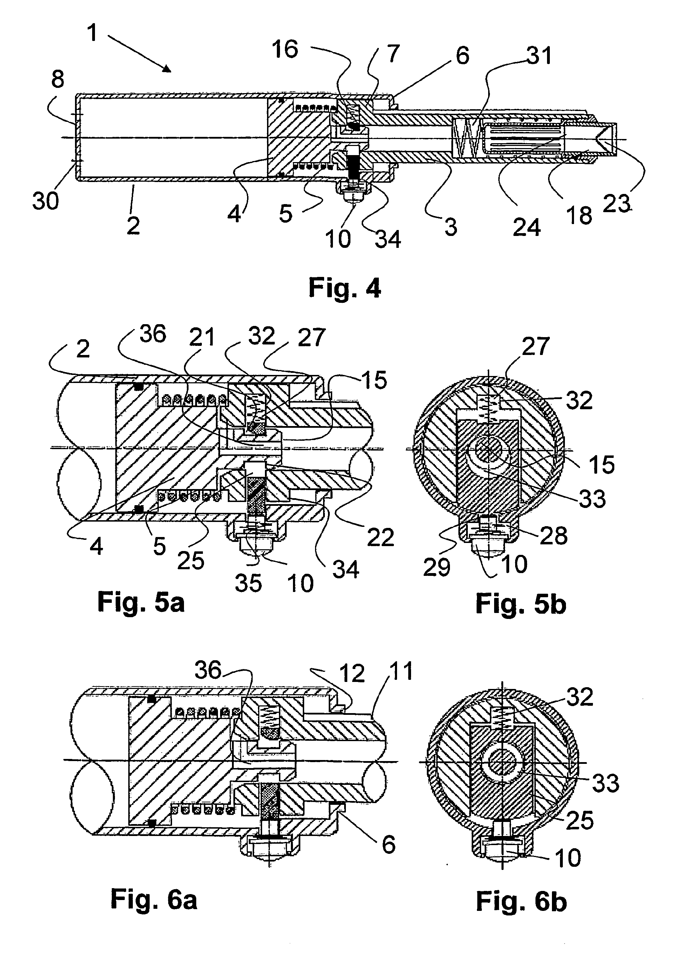

Die Figur 4 zeigt die Fangvorrichtung in einem Querschnitt durch die Längsachse mit gespannter Druckfeder in der verriegelten Auslöseposition. Der Auslöser 10 bzw. der Anschlag 34 sind am Gehäuse 2 so angeordnet, dass der Boden 7 des Saugrohrs 3 in dieser Position die vordere Zylinderwand 6 noch nicht berührt. Wird nun für einen Fangvorgang der Auslöser 10 gedrückt, so wird die Verriegelung 16 gelöst und das Saugrohr 3 schnellt einerseits nach vorne, bis der Boden 7 des Saugrohrs 3 innen an der vorderen Zylinderwand 6 ansteht, und andererseits schnellt der Kolben 4 in Richtung hintere Gehäusewand 8. Durch das Zurückschnellen des Kolbens 4 entsteht im Innenraum des Gehäuses 2 zwischen Kolben 4 und dem Boden 7 des Saugrohrs 3 impulsartig ein Unterdruck, der die Saugwirkung im Saugrohr 3 bewirkt und ein vor dem Saugrohr 3 befindliches Insekt in den Fangbehälter 18 einsaugt. Der Luftpolster zwischen dem Kolben 4 und der hinteren Gehäusewand 8 kann beim Zurückschnellen des Kolbens 4 durch die Öffnungen 30 in der hinteren Gehäusewand 8 entweichen. Da beim Auslösen des Fangvorgangs das Saugrohr 3 noch eine wenig nach vorne in Richtung Fangobjekt geschoben wird, erhöht sich die Fangquote gegenüber einem starren Saugrohr und das Insekt hat nahezu keine Möglichkeit, dem Sog der Fangvorrichtung zu entkommen. An der Mündung des Fangbehälters 18 ist ein aus feinen Drähten bestehendes Filter 23 ähnlich einem Reusenverschluss angeordnet. Die Drähte sind trichterförmig nach innen und gegen die Längsachse hin gerichtet und bilden eine Art Widerhaken, so dass ein eingesaugtes Insekt nicht aus dem Fangbehälter entwichen kann. Am gehäuseseitigen Ende des Fangbehälters 18 ist ein Sieb 24 vorgesehen, damit das Insekt nicht in das Gehäuse eingesaugt wird. Der im vorderen bereich des Saugrohrs 3 angeordnete Fangbehälter 18 ist mit einer Abfangfeder 31 stossgedämpft. Das heisst, dass der Fangbehälter 18 gegen die Federkraft der Abfangfeder 31 in das Saugrohr 3 gedrückt werden kann. Ist der Fangbehälter 18 in axialer Richtung wieder unbelastet, wird er von der Abfangfeder in seine ursprünglich Lage zurückgedrückt. Diese Stossdämpfung hat die Aufgabe, einen Stoss durch das Saugrohr 3 auf einen Gegenstand oder ein Objekt abzufangen, wenn die Fangvorrichtung 1 mit dem Saugrohr 3 beim Auslösen eines Fangvorganges zu nahe an ein festes Objekt gehalten wurde. Damit können Verletzungen an Personen oder Beschädigungen an Gegenständen vermieden werden.

Die Figur 5a zeigt eine Teilansicht eines Querschnitts durch die Längsachse der Fangvorrichtung 1 im Bereich der Haltevorrichtung bzw. des Auslösers 10 in verriegelter Position. Der Nippel 15 befindet sich in der kolbenseitigen Öffnung 21 des Saugrohrs 3. Der Rand der Öffnung 21 weist eine trichterförmige Abschrägung auf. Der Nippel 15 ist an seinem vorderen Ende kegelstumpfartig abgeschrägt. Dadurch wird erreicht, dass sich beim Einführen des Nippels 15 in die Öffnung 21 der Nippel 15 automatisch in der Öffnung 21 des Saugrohrs 3 zentriert. Der Boden 7 des Saugrohrs 3 weist einen senkrecht zur Längsachse verlaufenden Schlitz 25 auf, in dem ein Schieber 26 eingesetzt ist.

In der Figur 5b ist ein Querschnitt senkrecht zur Längsachse der Fangvorrichtung im Bereich der Haltevorrichtung in verriegelter Position dargestellt, in der die Details der Haltevorrichtung zu erkennen sind. Im Boden des Schlitzes 25 ist ein Sackloch 32 vorgesehen, in welches eine Druckfeder 27 eingesetzt ist. Diese Feder 27 drückt den Schieber gegen die Innenwand des Gehäuses 2. Das Loch 33 im Schieber 26 ist bezüglich der Längsachse des Kolben 4 und des Saugrohrs dezentriert. Wird das Saugrohr 3 gegen den Kolben 4 und der Nippel 15 in die kolbenseitige Öffnung 21 im Boden 7 des Saugrohres 3 gedrückt, so verschiebt das vordere Ende des Nippels 22 den Schieber 26 seitlich bis der Nippel 15 weit genug in das Saugrohr 3 eingeschoben ist und der federbelastete Schieber 26 in die Nut 22 einschnappt. Damit ist der unter der Spannung der Druckfeder 5 stehende Kolben 4 mit dem Saugrohr 3 in der Haltevorrichtung gehalten und verriegelt.

Die Figuren 6a und 6b zeigen die gleichen Teilansichten wie die Figuren 5a und 5b, mit dem Unterschied, dass der mit der Feder 35 federbelastete Druckknopf 10 gedrückt ist, wodurch der Stift 29 den Schieber 26 gegen den Federdruck der Feder 27 aus der Nut 22 im Nippel 15 schiebt. Dadurch ist die Haltevorrichtung 16 entriegelt und der Kolben 4 nicht mehr mit dem Saugrohr 3 zusammengehalten. Durch die Spannkraft der Druckfeder 5 werden das Saugrohr 3 und der Kolben 4 in entgegengesetzten Richtungen voneinander gedrückt. Im Nippel 15 ist noch eine Längsbohrung und eine mit dieser verbundene Querbohrung zu erkennen, die einen Luftkanal 36 bilden. Der Luftkanal 36 verbindet das Saugrohr 3 mit dem Innenraum des Kolbengehäuses 2 und ermöglicht, dass beim Fangvorgang unmittelbar nach dem Auslösen bereits Luft aus dem Saugrohr 3 gesogen werden kann, obwohl der Nippel 15 noch einen Teil der Öffnung 21 abdeckt.

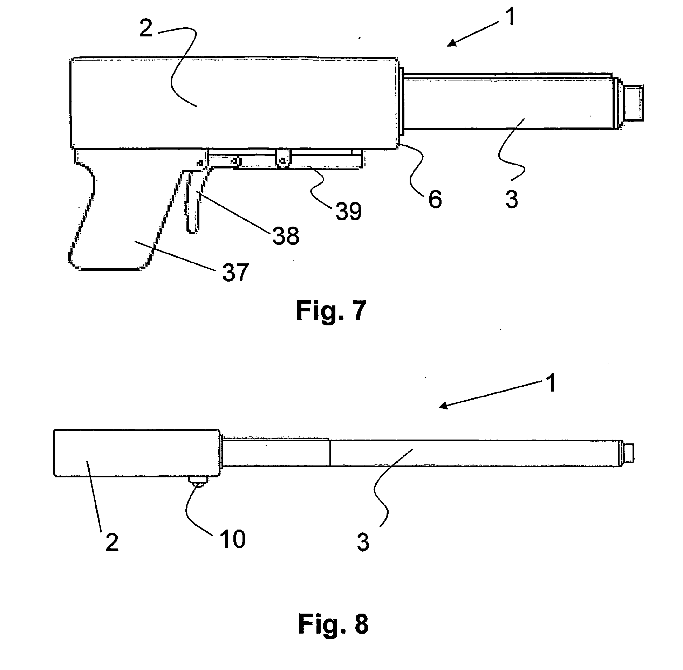

Die Figur 7 zeigt eine weitere Ausführungsform der erfindungsgemässen Fangvorrichtung 1. Am Gehäuse 2 der Fangvorrichtung 1 ist ein pistolenartiger Griff 37 mit einem Abzughebel 38 angeordnet. Durch ziehen am Abzughebel wird über einen Kipphebel 39 der Auslöser 10 betätigt.

Eine in Figur 8 gezeigte zweckmässige Weiterbildung der Erfindung besteht darin, dass das Saugrohr 3 in Form eines Teleskoprohres 40 ausgebildet ist. Mit Hilfe einer mit einem solchen Teleskoprohr 40 ausgerüsteten Vorrichtung können Stellen innerhalb eines Raumes erreicht werden, die normalerweise ohne Hilfsmittel nicht zugänglich sind, wie z. B. die Ecken zwischen der Decke und den Wänden von Wohnräumen.

Die erfindungsgemässe Vorrichtung ist also im Vergleich mit bekannten Vorrichtungen wesentlich einfacher und kleiner in ihrem Aufbau und insgesamt sicher in ihrer Anwendung und Wirkungsweise.

## Patentansprüche

1. Vorrichtung zum Fangen von Insekten, Spinnen und anderer derartiger Kleintiere mittels eines Impulssaugers (1) beinhaltend ein zylinderartiges Gehäuseteil (2), einen Kolben (4), ein Saugrohr(3) und ein federelastisches Element (5), wobei das federelastisches Element (5) durch eine Druckfeder gebildet ist, die zwischen dem Kolben (4) und dem Saugrohr (3) im Inneren des zylinderartigen Gehäuseteils (2) angeordnet ist, und das mit dem Kolben (4) über die Druckfeder (5) wirkverbundene Saugrohr (3) in axialer Richtung verschiebbar in einer Durchführung (9) in der vorderen Wand (6) des zylinderartigen Gehäuseteils (2) beweglich geführt ist, und der Kolben (4) saugrohrseitig Rastmittel (15,22) aufweist, die zum Einrasten in einer dafür im Bodenteil (7) des Saugrohrs (3) angeordneten Haltevorrichtung mit einer Verriegelung (16) vorgesehenen sind, die über einen von aussen bedienbaren Auslöser (10) entriegelbar sind.

2. Vorrichtung nach Anspruch 1, **dadurch gekennzeichnet, dass** die Rastmittel durch einen saugrohrseitig am Kolben (4) angeordneten Nippel (15) mit einer Ringnut (22) gebildet sind.

3. Vorrichtung nach Anspruch 2, **dadurch gekennzeichnet dass** die Haltevorrichtung (16) einen federbelasteten Schieber (26) beinhaltet, der in einem senkrecht zur Längsachse der Vorrichtung verlaufenden Schlitz (25) geführt ist und der ein Loch (33) aufweist, das zur Aufnahme des Nippels 15 bestimmt ist, dass weiter im Boden des Schlitzes (25) ein Sackloch (32) mit einer Druckfeder (27) vorgesehen ist, welche den Schieber (26) gegen die Innenwand des Gehäuses (2) drückt.

4. Vorrichtung nach Anspruch 2, **dadurch gekennzeichnet dass** der Nippel 15 eine axial verlaufende Längsbohrung aufweist, die in eine senkrecht dazu verlaufende Querbohrung mündet, so dass diese beiden Bohrungen einen Luftkanal (36) bilden.

5. Vorrichtung nach einem der vorherigen Ansprüche, **dadurch gekennzeichnet dass**, an der Oberseite des Saugrohrs (3) ein in Längsrichtung verlaufender Steg (11) angeordnet ist, der in eine Ausnehmung (12) in der Durchführung (9) der vorderen Gehäusewand (6) eingreift

6. Vorrichtung nach einem der vorherigen Ansprüche, **dadurch gekennzeichnet, dass** im vorderen Endbereich des Saugrohrs (3) ein abnehmbarer Fangbehälter (18) mit einem Reusenverschluss (23) an dessen Mündung angeordnet ist.

7. Vorrichtung nach Anspruch 6, **dadurch gekennzeichnet, dass** der Fangbehälter (18) in Längsrichtung mittels einer Abfangfeder (31) stossgedämpft ist.

8. Vorrichtung nach einem der vorhergehenden Ansprüche, **dadurch gekennzeichnet, dass** am Gehäuse (2) der Fangvorrichtung (1) ein pistolenartiger Griff (37) mit einem Abzughebel (38) und einem Kipphebel (39) zur Betätigung des Auslösers (10) angeordnet ist.

9. Vorrichtung nach einem der vorhergehenden Ansprüche, **dadurch gekennzeichnet, dass** das Saugrohr (3) in Form eines Teleskoprohres (40) ausgebildet ist.

10. Vorrichtung nach einem der vorhergehenden Ansprüche, **dadurch gekennzeichnet, dass** der Auslöser (10) am Gehäuse (2) derart positioniert ist, dass der Boden (7) des Saugrohrs (3) beim Auslösen eines Fangvorganges in Richtung zur vorderen Gehäusewand bewegbar ist.

## Claims

1. A device for catching insects, spiders, and other small animals of this type using a pulse suction unit (1), containing a cylindrical housing part (2), a piston (4), a suction tube (3), and a spring-elastic element (5), the spring-elastic element (5) being formed by a compression spring, which is situated between the piston (4) and the suction tube (3) in the interior of the cylindrical housing part (2), and the suction tube (3), which is operationally linked to the piston (4) via the compression spring (5), being guided so it is displaceable in the axial direction in a passage (9) in the front wall (6) of the cylindrical housing part (2), and the piston (4) having detent means (15, 22) on the suction tube side, which are provided to engage in a retention device, situated for this purpose in the floor part (7) of the section tube (3), having a lock (16), and which are unlockable via an externally operable actuator (10).

2. The device according to Claim 1, **characterized in that** the detent means are formed by a nipple (15), which is situated on the suction tube side on the piston (4), having an annular groove (22).

3. The device according to Claim 2, **characterized in that** the retention device (16) contains a spring-loaded slide (26), which is guided in a slot (25) running perpendicular to the longitudinal axis of the device, and which has a hole (33), which is intended to receive the nipple (15), furthermore, a pocket hole (32) having a compression spring (27) is provided in the floor of the slot (25), which presses the slide (26) against the inner wall of the housing (2).

4. The device according to Claim 2, **characterized in that** the nipple (15) has an axially running longitudinal hole, which opens into a transverse hole running perpendicular thereto, so that these two holes form an air channel (36).

5. The device according to one of the preceding claims, **characterized in that** a web (11), running in the longitudinal direction, is situated on the top side of the suction tube (3), which engages in a recess (12) in the passage (9) of the front housing wall (6).

6. The device according to one of the preceding claims, **characterized in that** a removable capture container (18), having a weir closure (23) on its mouth, is situated in the front end area of the suction tube (3).

7. The device according to Claim 6, **characterized in that** the capture container (18) is cushioned in the longitudinal direction using an intercepting spring (31).

8. The device according to one of the preceding claims, **characterized in that** a pistol grip (37) having a trigger lever (38) and a rocker lever (39) for actuating the actuator (10) is situated on the housing (2) of the capture device (1).

9. The device according to one of the preceding claims, **characterized in that** the suction tube (3) is implemented in the form of a telescoping tube (40).

10. The device according to one of the preceding claims, **characterized in that** the actuator (10) is positioned on the housing (2) in such a way that the floor (7) of the suction tube (3) is movable in the direction toward the front housing wall upon triggering of a capture action.

## Revendications

1. Dispositif pour capturer des insectes, araignées et autres petits animaux similaires au moyen d'un aspirateur à impulsions (1) comprenant une partie de boîtier cylindrique (2), un piston (4), un tube d'aspiration (3) et un élément élastique à la manière d'un ressort (5), dans lequel l'élément élastique à la manière d'un ressort (5) est formé par un ressort de compression qui est disposé entre le piston (4) et le tube d'aspiration (3) à l'intérieur de la partie de boîtier cylindrique (2), et le tube d'aspiration (3) en liaison active avec le piston (4) par l'intermédiaire du ressort de compression (5) est guidé de façon mobile dans le sens axial dans une ouverture (9) dans la paroi antérieure (6) de la partie de boîtier cylindrique (2), et le piston (4) présente du côté du tube d'aspiration des moyens d'engagement (15, 22) destinés à s'engager dans un dispositif de maintien prévu à cette fin dans la partie de fond (7) du tube d'aspiration (3) avec un verrouillage (16), lesquels peuvent être déverrouillés à l'aide d'un déclencheur (10) pouvant être actionné de l'extérieur.

2. Dispositif selon la revendication 1, **caractérisé en ce que** les moyens d'engagement sont formés par un téton (15) avec une gorge annulaire (22) disposé du côté du tube d'aspiration sur le piston (4).

3. Dispositif selon la revendication 2, **caractérisé en ce que** le dispositif de maintien (16) comprend une coulisse (26) contrainte par un ressort qui est guidée dans une fente (25) perpendiculaire à l'axe longitudinal du dispositif et qui présente un trou (33) destiné à recevoir le téton (15), **en ce qu'**il est en outre prévu dans le fond de la fente (25) un trou borgne (32) avec un ressort de compression (27) qui pousse la coulisse (26) contre la paroi intérieure du boîtier (2).

4. Dispositif selon la revendication 2, **caractérisé en ce que** le téton (15) présente un alésage longitudinal orienté dans le sens axial, qui débouche dans un alésage transversal qui lui est perpendiculaire, de telle sorte que ces deux alésages forment un canal pour l'air (36).

5. Dispositif selon l'une des revendications précédentes, **caractérisé en ce qu'**il est prévu sur la face supérieure du tube d'aspiration (3) une barrette (11) orientée dans le sens longitudinal qui se met en prise dans un creux (12) dans l'ouverture (9) de la paroi antérieure du boîtier (6).

6. Dispositif selon l'une des revendications précédentes, **caractérisé en ce qu'**il est prévu dans la partie d'extrémité antérieure du tube d'aspiration (3) un réservoir de capture (18) amovible avec un couvercle en forme de nasse (23) à son embouchure.

7. Dispositif selon la revendication 6, **caractérisé en ce que** le réservoir de capture (18) est amorti contre les chocs dans le sens longitudinal au moyen d'un ressort d'absorption (31).

8. Dispositif selon l'une des revendications précédentes, **caractérisé en ce qu'**il est prévu sur le boîtier (2) du dispositif de capture (1) une poignée en forme de pistolet (37) avec un levier de traction (38) et un levier basculant (39) pour l'actionnement du déclencheur (10).

9. Dispositif selon l'une des revendications précédentes, **caractérisé en ce que** le tube d'aspiration (3) est conformé comme un tube télescopique (40).

10. Dispositif selon l'une des revendications précédentes, **caractérisé en ce que** le déclencheur (10) est disposé sur le boîtier (2) de telle façon que le fond (7) du tube d'aspiration (3) est mobile en direction de la paroi antérieure du boîtier lors du déclenchement d'une opération de capture.
